# EUROPEAN PATENT APPLICATION

(11) **EP 4 471 592 A1**
(43) Date of publication of application: **04.12.2024**
(21) Application number: 23784176.2
(22) Date of filing: 23.03.2023
(51) Int. Cl.: G06F 9/50

(54) **CHANNEL ALLOCATION METHOD AND APPARATUS FOR DISPLAY SUBSYSTEM, AND STORAGE MEDIUM**

(30) Priority: 07.04.2022 CN 202210360573
(71) Applicant: Huawei Technologies Co., Ltd., Shenzhen, Guangdong 518129 (CN)
(72) Inventor: QIAO, Nuohan, Shenzhen, Guangdong 518129 (CN); YANG, Hongyang, Shenzhen, Guangdong 518129 (CN)
(74) Representative: Thun, Clemens
(86) International application number: PCT/CN2023/083418
(87) International publication number: WO 2023/193612

(57) **Abstract**

Embodiments of this application provide a channel allocation method and apparatus for a display subsystem, and a storage medium, and relate to the field of computer technologies, to improve DSS resource utilization. The method includes: determining a target to-be-displayed layer based on a priority of a first to-be-displayed layer and a priority of a second to-be-displayed layer, where the first to-be-displayed layer belongs to a first domain, the second to-be-displayed layer belongs to a second domain, the first domain is different from the second domain, and the target to-be-displayed layer is a layer with a higher priority in the first to-be-displayed layer and the second to-be-displayed layer; and allocating, in at least one synthesis channel, a target synthesis channel to the target to-be-displayed layer, where the target synthesis channel is configured to transmit the target to-be-displayed layer to an image synthesis unit, so that the image synthesis unit synthesizes the target to-be-displayed layer into a to-be-displayed image.

## Description

This application claims priority to Chinese Patent Application No. 202210360573.X, filed with the China National Intellectual Property Administration on April 7, 2022 and entitled "CHANNEL ALLOCATION METHOD AND APPARATUS FOR DISPLAY SUBSYSTEM, AND STORAGE MEDIUM", which is incorporated herein by reference in its entirety.

### TECHNICAL FIELD

Embodiments of this application relate to the field of computer technologies, and in particular, to a channel allocation method and apparatus for a display subsystem, and a storage medium.

### BACKGROUND

With continuous development of Internet technologies, a display subsystem (display Subsystem, DSS) is increasingly widely used in a layer synthesis scenario.

In a scenario in which a plurality of domains exist, a conventional image synthesis method is to physically isolate a DSS. The physical isolation specifically includes: allocating DSS resources into a plurality of domains. Each domain can use only a DSS resource allocated to the domain. The DSS resource includes a physical channel and an image synthesis unit. For example, a domain A and a domain B exist in a current architecture. 40% of DSS resources are allocated to the domain A, and 60% of DSS resources are allocated to the domain B. The domain A uses the 40% of DSS resources in a pass-through mode, and the domain B uses the 60% of DSS resources in a pass-through mode.

However, because the DSS is physically isolated in the foregoing technical solution, when a DSS resource actually required by a domain is greater than a DSS resource allocated to the domain, the domain cannot use an idle DSS resource of another domain. As a result, DSS resource utilization decreases.

### SUMMARY

Embodiments of this application provide a channel allocation method and apparatus for a display subsystem, and a storage medium, to improve DSS resource utilization.

To achieve the foregoing objectives, the following technical solutions are used in embodiments of this application.

According to a first aspect, an embodiment of this application provides a channel allocation method for a display subsystem. The method includes: determining a target to-be-displayed layer based on a priority of a first to-be-displayed layer and a priority of a second to-be-displayed layer, where the first to-be-displayed layer belongs to a first domain, the second to-be-displayed layer belongs to a second domain, the first domain is different from the second domain, and the target to-be-displayed layer is a layer with a higher priority in the first to-be-displayed layer and the second to-be-displayed layer; and allocating, in at least one synthesis channel, a target synthesis channel to the first target to-be-displayed layer, where the target synthesis channel is configured to transmit the first target to-be-displayed layer to an image synthesis unit, so that the image synthesis unit synthesizes the target to-be-displayed layer into a to-be-displayed image.

Compared with a conventional manner of allocating a DSS resource through physical isolation, in the DSS channel allocation method provided in this embodiment of this application, the to-be-displayed layer with the higher priority in the first to-be-displayed layer and the second to-be-displayed layer is determined as the target to-be-displayed layer. The first to-be-displayed layer and the second to-be-displayed layer belong to different domains. The target synthesis channel is allocated to the target to-be-displayed layer. In other words, in this application, a synthesis channel is allocated to a to-be-displayed layer with a high priority in different domains based on an idle state of the synthesis channel in the DSS, that is, synthesis channels are uniformly allocated to to-be-displayed layers in different domains. Compared with a technical solution in the conventional technology in which DSS resources are allocated into a plurality of parts, each part of resources are bound to to-be-displayed layers in a specific domain, and DSS resources are isolated between different domains, in the method provided in this embodiment of this application, when an idle synthesis channel exists, the idle synthesis channel can be allocated to a to-be-displayed layer. Therefore, DSS resource utilization is improved.

In a possible implementation, after the allocating, in at least one synthesis channel, a target synthesis channel to the target to-be-displayed layer, the method further includes: when an idle channel exists in a non-target synthesis channel of the at least one synthesis channel, allocating the idle channel to a non-target to-be-displayed layer in the first to-be-displayed layer and the second to-be-displayed layer.

According to the DSS channel allocation method provided in this embodiment of this application, after the synthesis channel is allocated to the target to-be-displayed layer with the high priority, if an idle channel exists in the at least one synthesis channel, the idle channel is allocated to the non-target to-be-displayed layer, so that the idle channel in the DSS is used to a greater extent, and the DSS resource utilization is improved.

In a possible implementation, the method further includes: separately determining the priority of the first to-be-displayed layer and the priority of the second to-be-displayed layer based on a priority of the first domain and a priority of the second domain, where a priority of a to-be-displayed layer is a priority of a domain to which the to-be-displayed layer belongs.

In this embodiment of this application, the priority of the domain is determined as the priority of the to-be-displayed layer in the domain, so that priorities of different to-be-displayed layers in the domain are consistent. Further, when the image synthesis unit subsequently synthesizes the to-be-displayed image based on the to-be-displayed layer, the image synthesis unit does not need to wait for a layer with a lower priority, and the image synthesis unit simultaneously receives all to-be-displayed layers in the domain, so that synthesis efficiency of the to-be-displayed image is improved.

In a possible implementation, the method further includes: determining the priority of the first domain and the priority of the second domain based on a refresh rate of a layer set in the first domain and a refresh rate of a layer set in the second domain, where the layer set in the first domain includes the first to-be-displayed layer, the layer set in the second domain includes the second to-be-displayed layer, and a higher refresh rate of a layer set indicates a higher priority of a domain to which the layer set belongs.

In this embodiment of this application, a domain with a higher refresh rate of a layer set is determined as a domain with a higher priority, so that a synthesis channel is preferentially allocated to an important layer set, and reliability is improved.

In a possible implementation, the method further includes: determining a layer subset in a layer set in the first domain, where a refresh rate of a layer in the layer subset is higher than a refresh rate of the second to-be-displayed layer, and the layer subset includes the first to-be-displayed layer.

In this embodiment of this application, a synthesis channel is preferentially allocated to a layer with a higher refresh rate in the layer set of the first domain, so that a problem that a layer with a lower refresh rate in the first domain also preferentially occupies a synthesis channel is resolved, and synthesis channel utilization is improved.

In a possible implementation, the method further includes: adjusting the priority of the first domain and/or the priority of the second domain.

In a possible implementation, the method is used in a vehicle cockpit, the vehicle cockpit includes a first display for displaying vehicle safety information and a second display for entertainment, the first display belongs to the first domain, and the second display belongs to the second domain.

In a possible implementation, the method further includes: adjusting the priority of the first domain and/or the priority of the second domain based on a running state of a vehicle in which the vehicle cockpit is located, where the priority of the to-be-displayed layer is the priority of the domain to which the to-be-displayed layer belongs.

A user has different main requirements in different running states of the vehicle. For example, in a parking state, the user has a higher requirement for entertainment. In a driving state, the user has a higher requirement for security. Therefore, dynamically adjusting the priority of the domain based on the running state of the vehicle helps improve user experience.

In a possible implementation, the adjusting the priority of the first domain and/or the priority of the second domain based on a running state of a vehicle in which the vehicle cockpit is located includes: when the vehicle is in the parking state, adjusting the priority of the first domain and/or the priority of the second domain, so that the priority of the first domain is lower than the priority of the second domain; or when the vehicle is in the driving state, adjusting the priority of the first domain and/or the priority of the second domain, so that the priority of the first domain is higher than the priority of the second domain.

When a priority of a domain is higher, a synthesis channel is preferentially allocated to a to-be-displayed layer corresponding to the domain, so that dependence on a GPU to synthesize an image when channels are insufficient is reduced, and a problem that efficiency of synthesizing an image by the GPU is poor is avoided. In addition, when the vehicle is in the parking state, security is high. In this case, a main requirement of the user is usually an entertainment function. Therefore, a priority of the domain to which the second display (for entertainment) belongs is set to be higher than a priority of the domain to which the first display (for displaying the vehicle security information) belongs. This helps synthesize an image representing entertainment information more quickly, so that user experience is improved.

According to a second aspect, an embodiment of this application provides a channel allocation method for a display subsystem. The method includes: determining a first target to-be-displayed layer based on a priority of a first domain and a priority of at least one layer in a layer set of a second domain, where the first target to-be-displayed layer is a layer whose priority is higher than the priority of the first domain and that is in the layer set of the second domain, and the priority of the first domain is higher than a priority of the second domain; and allocating, in at least one synthesis channel, a target synthesis channel to the first target to-be-displayed layer, where the target synthesis channel is configured to transmit the first target to-be-displayed layer to an image synthesis unit, so that the image synthesis unit synthesizes the first target to-be-displayed layer into a to-be-displayed image.

In this embodiment of this application, when the priority of the first domain is higher than the priority of the second domain, the layer whose priority is higher than the priority of the first domain and that is in the layer set of the second domain is determined as the first target to-be-displayed layer. In addition, the target synthesis channel is preferentially allocated to the first target to-be-displayed layer, so that a problem that a layer with a lower refresh rate in the first domain also preferentially occupies a synthesis channel is resolved, and synthesis channel utilization is improved.

In a possible implementation, the method further includes: determining a second target to-be-displayed layer based on the priority of the first domain and a priority of at least one layer in the layer set of the second domain, where the second target to-be-displayed layer includes a first to-be-displayed layer and a layer in a layer set of the first domain, and the first to-be-displayed layer is a layer whose priority is equal to the priority of the first domain and that is in the layer set of the second domain; and when an idle channel exists in the at least one synthesis channel, allocating the idle channel to the second target to-be-displayed layer.

In this embodiment of this application, after the synthesis channel is allocated to the first target to-be-displayed layer that has a high priority, if an idle channel exists in the at least one synthesis channel, the idle channel is allocated to the second target to-be-displayed layer that includes the first to-be-displayed layer and the layer in the layer set of the first domain. The first to-be-displayed layer is a layer whose priority is equal to the priority of the first domain and that is in the layer set of the second domain. In this way, the idle channel in a DSS is utilized to a greater extent, and DSS resource utilization is improved.

According to a third aspect, an embodiment of this application provides a channel allocation apparatus for a display subsystem, where the apparatus includes a determining module and an allocation module. The determining module is configured to determine a target to-be-displayed layer based on a priority of a first to-be-displayed layer and a priority of a second to-be-displayed layer, where the first to-be-displayed layer belongs to a first domain, the second to-be-displayed layer belongs to a second domain, the first domain is different from the second domain, and the target to-be-displayed layer is a layer with a higher priority in the first to-be-displayed layer and the second to-be-displayed layer. The allocation module is configured to allocate, in at least one synthesis channel, a target synthesis channel to the target to-be-displayed layer, where the target synthesis channel is configured to transmit the target to-be-displayed layer to an image synthesis unit, so that the image synthesis unit synthesizes the target to-be-displayed layer into a to-be-displayed image.

In a possible implementation, the allocation apparatus is further configured to: when an idle channel exists in a non-target synthesis channel of the at least one synthesis channel, allocate the idle channel to a non-target to-be-displayed layer in the first to-be-displayed layer and the second to-be-displayed layer.

In a possible implementation, the determining module is configured to separately determine the priority of the first to-be-displayed layer and the priority of the second to-be-displayed layer based on a priority of the first domain and a priority of the second domain, where a priority of a to-be-displayed layer is a priority of a domain to which the to-be-displayed layer belongs.

In a possible implementation, the determining module is configured to determine the priority of the first domain and the priority of the second domain based on a refresh rate of a layer set in the first domain and a refresh rate of a layer set in the second domain, where the layer set in the first domain includes the first to-be-displayed layer, the layer set in the second domain includes the second to-be-displayed layer, and a higher refresh rate of a layer set indicates a higher priority of a domain to which the layer set belongs.

In a possible implementation, the determining module is configured to determine a layer subset in a layer set in the first domain, where a refresh rate of a layer in the layer subset is higher than a refresh rate of the second to-be-displayed layer, and the layer subset includes the first to-be-displayed layer.

In a possible implementation, the apparatus further includes an adjustment module, where the adjustment module is configured to adjust the priority of the first domain and/or the priority of the second domain.

In a possible implementation, the apparatus is used in a vehicle cockpit, the vehicle cockpit includes a first display for displaying vehicle safety information and a second display for entertainment, the first display belongs to the first domain, and the second display belongs to the second domain.

In a possible implementation, the adjustment module is configured to adjust the priority of the first domain and/or the priority of the second domain based on a running state of a vehicle in which the vehicle cockpit is located, where the priority of the to-be-displayed layer is the priority of the domain to which the to-be-displayed layer belongs.

In a possible implementation, when the vehicle is in a parking state, the adjustment module is configured to adjust the priority of the first domain and/or the priority of the second domain, so that the priority of the first domain is lower than the priority of the second domain; or when the vehicle is in a driving state, the adjustment module is configured to adjust the priority of the first domain and/or the priority of the second domain, so that the priority of the first domain is higher than the priority of the second domain.

According to a fourth aspect, an embodiment of this application provides a channel allocation apparatus for a display subsystem, where the apparatus includes a determining module and an allocation module. The determining module is configured to determine a first target to-be-displayed layer based on a priority of a first domain and a priority of at least one layer in a layer set of a second domain, where the first target to-be-displayed layer is a layer whose priority is higher than the priority of the first domain and that is in the layer set of the second domain, and the priority of the first domain is higher than a priority of the second domain. The allocation module is configured to allocate, in at least one synthesis channel, a target synthesis channel to the first target to-be-displayed layer, where the target synthesis channel is configured to transmit the first target to-be-displayed layer to an image synthesis unit, so that the image synthesis unit synthesizes the first target to-be-displayed layer into a to-be-displayed image.

In a possible implementation, the determining module is further configured to determine a second target to-be-displayed layer based on the priority of the first domain and a priority of at least one layer in the layer set of the second domain, where the second target to-be-displayed layer includes a first to-be-displayed layer and a layer in a layer set of the first domain, and the first to-be-displayed layer is a layer whose priority is equal to the priority of the first domain and that is in the layer set of the second domain.

The allocation module is further configured to: when an idle channel exists in the at least one synthesis channel, allocate the idle channel to the second target to-be-displayed layer.

According to a fifth aspect, an embodiment of this application provides an electronic device, including a memory and a processor. The memory is coupled to the processor. The memory is configured to store computer program code, where the computer program code includes computer instructions. When the computer instructions are executed by the processor, the electronic device is enabled to perform the method according to the first aspect or the second aspect, or any one of the possible implementations of the first aspect or the second aspect.

According to a sixth aspect, an embodiment of this application provides a computer-readable storage medium. The computer-readable storage medium stores computer instructions. When the computer instructions are run on a computing device, the computing device is enabled to perform the method according to the first aspect or the second aspect, or any one of the possible implementations of the first aspect or the second aspect.

According to a seventh aspect, an embodiment of this application provides a computer program product. When the computer program product runs on a computer, the computer is enabled to perform the method according to the first aspect or the second aspect, or any one of the possible implementations of the first aspect or the second aspect.

It should be understood that, for beneficial effects achieved by the technical solutions in the third aspect to the fifth aspect and the corresponding possible implementations in embodiments of this application, refer to the foregoing technical effects in the first aspect, the second aspect, and the corresponding possible implementations. Details are not described herein again.

### BRIEF DESCRIPTION OF DRAWINGS

FIG. 1 is a diagram of a DSS resource allocation architecture according to an embodiment of this application;
FIG. 2 is a schematic flowchart of DSS resource allocation according to an embodiment of this application;
FIG. 3 is a diagram of hardware of a DSS channel allocation apparatus according to an embodiment of this application;
FIG. 4 is a schematic flowchart 1 of a DSS channel allocation method according to an embodiment of this application;
FIG. 5 is a diagram of allocating a synthesis channel according to an embodiment of this application;
FIG. 6 is a schematic flowchart 2 of a DSS channel allocation method according to an embodiment of this application;
FIG. 7 is another diagram of allocating a synthesis channel according to an embodiment of this application;
FIG. 8 is a schematic flowchart 3 of a DSS channel allocation method according to an embodiment of this application;
FIG. 9 is a schematic flowchart 4 of a DSS channel allocation method according to an embodiment of this application;
FIG. 10 is a schematic flowchart 5 of a DSS channel allocation method according to an embodiment of this application;
FIG. 11 is a schematic flowchart 6 of a DSS channel allocation method according to an embodiment of this application;
FIG. 12 is a schematic flowchart 7 of a DSS channel allocation method according to an embodiment of this application;
FIG. 13 is a schematic flowchart 8 of a DSS channel allocation method according to an embodiment of this application;
FIG. 14 is a diagram of a DSS channel allocation apparatus according to an embodiment of this application; and
FIG. 15 is a diagram of another DSS channel allocation apparatus according to an embodiment of this application.

### DESCRIPTION OF EMBODIMENTS

The term "and/or" in this specification describes only an association relationship for associated objects and represents that three relationships may exist. For example, A and/or B may represent the following three cases: Only A exists, both A and B exist, and only B exists.

In the specification and claims in embodiments of this application, the terms "first", "second", and so on are intended to distinguish between different objects but do not indicate a particular order of the objects. For example, a first domain, a second domain, and the like are used to distinguish between different domains, but are not used to describe a specific order of the domains.

In embodiments of this application, the term "example" or "for example" is used to represent giving an example, an illustration, or a description. Any embodiment or design scheme described as "example" or "for example" in embodiments of this application should not be construed as being more preferred or having more advantages than another embodiment or design scheme. Exactly, use of the term such as "example" or "for example" is intended to present a related concept in a specific manner.

In the descriptions of embodiments of this application, unless otherwise specified, "a plurality of" means two or more than two. For example, a plurality of synthesis channels mean two or more synthesis channels and a plurality of domains mean two or more domains.

First, some concepts related to a channel allocation method and apparatus for a display subsystem, and a storage medium that are provided in embodiments of this application are explained and described.

Domain: A domain is a management boundary used by a group of computers or systems to share a common security database. The domain is actually a set of servers and workstations. Computers in a same domain establish trust relationships with each other. Accessing another machine in the domain does not require a permission of an accessed machine.

A display subsystem (display subsystem, DSS) is configured to synthesize an image based on a layer (window). A process in which the DSS synthesizes the image based on the layer has lower power consumption and higher synthesis efficiency than a process in which a graphics processing unit (graphics processing unit, GPU) synthesizes an image based on a layer. The DSS allocates a synthesis channel to each layer. After an image synthesis unit synthesizes the image, the image is sent to a display for display. Specifically, a synthesis channel in the DSS is classified into a special channel and a non-special channel. The special channel may perform special processing on a layer based on a special requirement of the layer, where the special requirement includes performing at least one of rotation processing, scaling processing, cropping processing, transparency processing, and corner rounding processing on the image.

A refresh rate of a layer indicates a quantity of update times of the layer or an image (that is, the image synthesized based on the layer) corresponding to the layer in a unit of time, or indicates a time interval at which the layer or an image corresponding to the layer is updated. For example, if a layer A is updated every 33 milliseconds (ms), a refresh rate of the layer A is 33 ms/time.

One-core multi-screen: One-core multi-screen is an integrated intelligent cockpit solution that uses one chip to support a plurality of cockpit products. Physical isolation is one of the solutions.

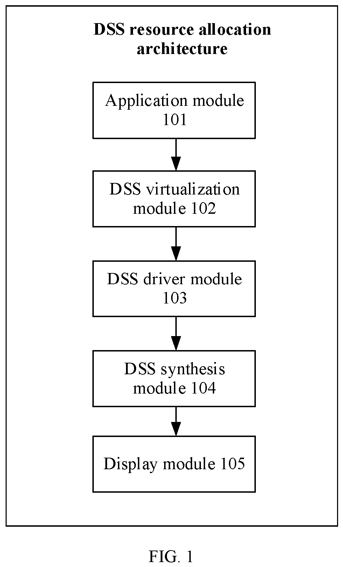

The DSS channel allocation method provided in embodiments of this application may be applied to a DSS resource allocation architecture shown in FIG. 1. Virtualization processing needs to be performed on the DSS in the architecture. A specific virtualization processing process is not limited in embodiments of this application. The DSS resource allocation architecture includes an application module 101, a DSS virtualization (virtual DSS) module 102, a DSS driver (DSS driver) module 103, a DSS synthesis module 104, and a display (display) module 105.

The application module 101 is configured to trigger a to-be-displayed request, where the to-be-displayed request includes information about each layer in a to-be-displayed image. The DSS virtualization module 102 is configured to convert the to-be-displayed request into a form that can be received by the DSS driver module 103. The DSS driver module 103 is configured to allocate a synthesis channel to each layer, and send each layer to the DSS synthesis module 104. The DSS synthesis module 104 is configured to synthesize a target image based on the received layer. The display module 105 is configured to display the image on a display.

A specific procedure of the foregoing DSS resource allocation architecture includes the following steps.
1. After the application module 101 triggers the to-be-displayed request, the application module 101 sends the to-be-displayed request to the DSS virtualization module 102.
2. After receiving the to-be-displayed request, the DSS virtualization module 102 performs form or format conversion on content and a parameter of the to-be-displayed request, so that the DSS driver module 103 can receive the to-be-displayed request.
3. The DSS virtualization module 102 sends a processed to-be-displayed request to the DSS driver module 103, and the DSS driver module 103 allocates the synthesis channel to each layer based on a requirement of the layer in the processed to-be-displayed request, and sends the layer to the DSS synthesis module 104 through the synthesis channel.
4. The DSS synthesis module 104 synthesizes the target image based on the received layer, and sends the target image to the display module 105, so that the target image is displayed on the display.

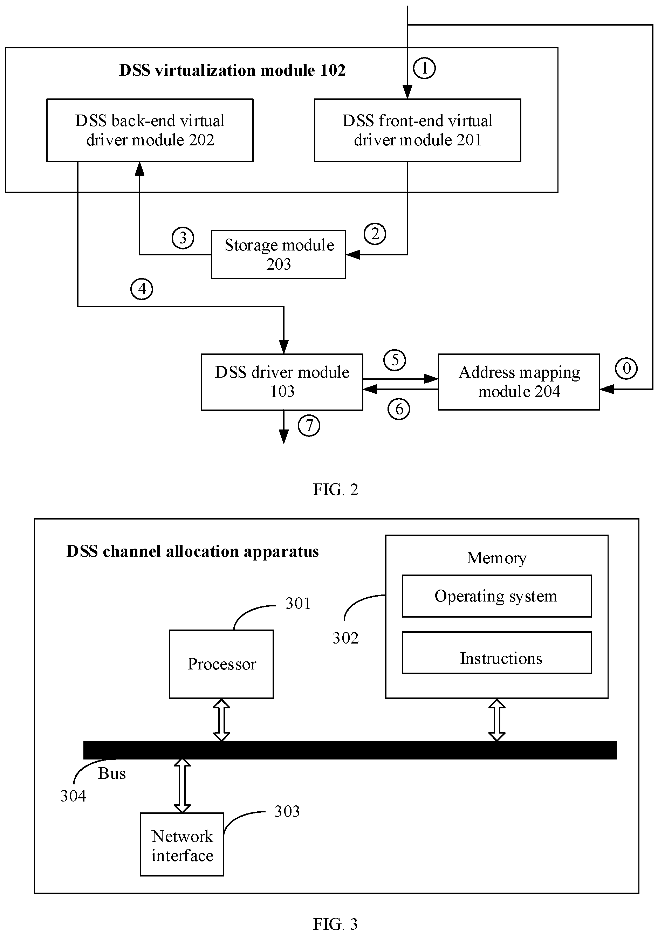

A specific implementation process of the foregoing steps 2 and 3 is shown in FIG. 2. The DSS virtualization module 102 includes: a DSS front-end virtual driver module (virtual DSS frontend driver) 201 and a DSS back-end virtual driver module (virtual DSS backend driver) 202. The DSS resource allocation architecture may further include a storage module 203 and an address mapping module 204. An implementation process in FIG. 2 is specifically as follows:
Step 0: The address mapping module 204 obtains an address of each layer in a to-be-displayed request, where the layer address is a physical address; and the address mapping module 204 maps the physical address to a virtual address for storage.
Steps 1 and 2: The DSS front-end virtual driver module 201 receives a to-be-displayed request sent by an upper-layer application, and stores the to-be-displayed request in the storage module 203.
Step 3: The DSS back-end virtual driver module 202 obtains the to-be-displayed request from the storage module 203 based on a rank of the to-be-displayed request (the storage module 203 is similar to a first-in-first-out stack), and the DSS back-end virtual driver module 202 organizes information of the to-be-displayed request and converts a format or a form of a parameter of the to-be-displayed request, so that an interface of the DSS driver module 103 can receive a to-be-displayed request processed by the DSS back-end virtual driver module 202.
Step 4: The DSS back-end virtual driver module 202 sends the processed to-be-displayed request to the DSS driver module 103.
Steps 5 and 6: The to-be-displayed request received by the DSS driver module 103 includes the physical address of each layer, and the DSS driver module 103 sends the physical address to the address mapping module 204 to obtain a virtual address corresponding to the physical address.
Step 7: The DSS driver module 103 obtains a corresponding layer based on the obtained virtual address, and allocates a synthesis channel to the layer, so that the layer is transmitted to the DSS synthesis module 104 through the synthesis channel.

It should be noted that, for a specific implementation of allocating the synthesis channel to the layer in step 7, refer to the following method parts.

For example, FIG. 3 is a diagram of hardware of a DSS channel allocation apparatus (channel allocation apparatus for short) according to an embodiment of this application. The channel allocation apparatus is a specific implementation of the DSS driver module 103 in FIG. 1 or FIG. 2. The channel allocation apparatus specifically includes a processor 301, a memory 302, and a network interface 303.

The processor 301 includes one or more CPUs. The CPU may be a single-core CPU (single-CPU) or a multi-core CPU (multi-CPU).

The memory 302 includes but is not limited to a RAM, a ROM, an EPROM, a flash memory, or an optical memory.

Optionally, the processor 301 implements, by reading instructions stored in the memory 302, the DSS channel allocation method provided in embodiments of this application, or the processor 301 implements, based on instructions stored internally, the DSS channel allocation method provided in embodiments of this application. When the processor 301 implements the method in the foregoing embodiment by reading the instructions stored in the memory 302, the memory 302 stores instructions for implementing the DSS channel allocation method provided in embodiments of this application.

The network interface 303 is a wired interface (port), for example, an FDDI or a GE interface. Alternatively, the network interface 303 is a wireless interface. It should be understood that the network interface 303 includes a plurality of physical ports, and the network interface 303 is configured to obtain a display request and the like.

Optionally, the channel allocation apparatus further includes a bus 304. The processor 301, the memory 302, and the network interface 303 are usually connected to each other through the bus 304, or are connected to each other in another manner.

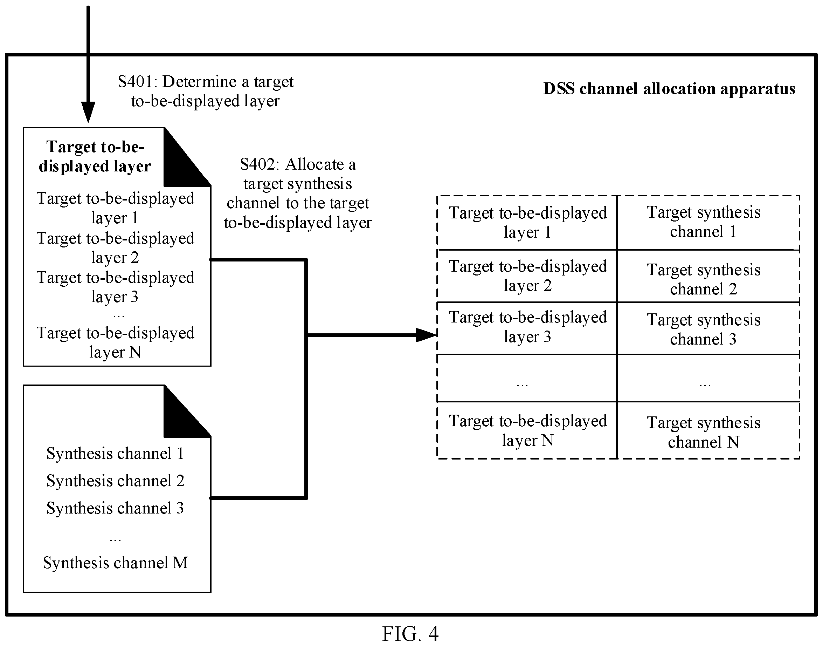

An embodiment of this application provides a DSS channel allocation method. The method is applied to a channel allocation apparatus. As shown in FIG. 4, the method may include S401 and S402.

S401: The channel allocation apparatus determines a target to-be-displayed layer based on a priority of a first to-be-displayed layer and a priority of a second to-be-displayed layer.

The first to-be-displayed layer belongs to a first domain, the second to-be-displayed layer belongs to a second domain, and the first domain and the second domain are different domains.

The target to-be-displayed layer is a layer with a higher priority in the first to-be-displayed layer and the second to-be-displayed layer. The priority herein refers to a priority of preferentially allocating a synthesis channel.

For example, a value corresponding to a priority of a first layer is 5, a value corresponding to a priority of a second layer is 3, and the first layer is determined as a target layer. A larger value corresponding to a priority indicates a higher priority.

S402: The channel allocation apparatus allocates, in at least one synthesis channel, a target synthesis channel to the target to-be-displayed layer.

In an implementation, the at least one synthesis channel is all synthesis channels that are in a DSS and that are not used to transmit a layer at a current moment, and the target synthesis channel is one or more synthesis channels selected from the at least one synthesis channel.

In another implementation, the at least one synthesis channel is all synthesis channels in a DSS, and the target synthesis channel is one or more synthesis channels in all synthesis channels that are in the at least one synthesis channel and that are not used to transmit a layer at a current moment.

The target synthesis channel is configured to transmit the target to-be-displayed layer to an image synthesis unit, so that the image synthesis unit synthesizes the target to-be-displayed layer into a to-be-displayed image.

It should be noted that the channel allocation apparatus allocates only one target synthesis channel to each to-be-displayed layer. At least one target synthesis channel corresponds to one image synthesis unit. Each image synthesis unit synthesizes a to-be-displayed image based on a to-be-displayed layer transmitted on a target synthesis channel corresponding to the image synthesis unit.

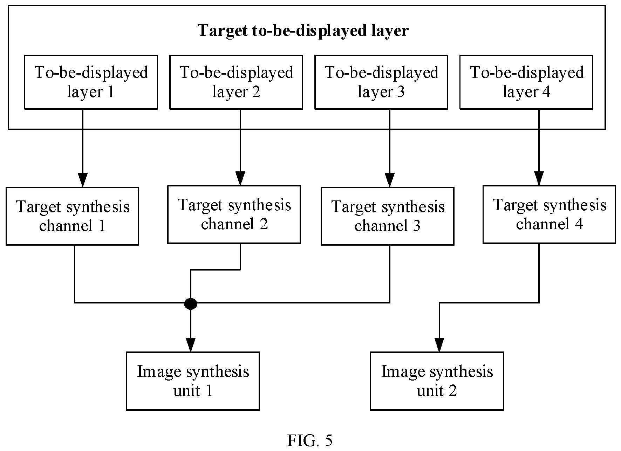

For example, as shown in FIG. 5, the target to-be-displayed layer includes to-be-displayed layers 1 to 4. The channel allocation apparatus allocates a target synthesis channel 1 to the to-be-displayed layer 1, a target synthesis channel 2 to the to-be-displayed layer 2, a target synthesis channel 3 to the to-be-displayed layer 3, and a target synthesis channel 4 to the to-be-displayed layer 4. An image synthesis unit 1 corresponds to the target synthesis channels 1 to 3, and an image synthesis unit 2 corresponds to the target synthesis channel 4. The image synthesis unit 1 synthesizes a to-be-displayed image 1 based on the to-be-displayed layers 1 to 3 transmitted by the target synthesis channels 1 to 3, and the image synthesis unit 2 synthesizes a to-be-displayed image 2 based on the to-be-displayed layer 4 transmitted by the target synthesis channel 4.

Compared with a conventional manner of allocating a DSS resource through physical isolation, in the DSS channel allocation method provided in this embodiment of this application, the to-be-displayed layer with the higher priority in the first to-be-displayed layer and the second to-be-displayed layer is determined as the target to-be-displayed layer. The first to-be-displayed layer and the second to-be-displayed layer belong to different domains. The target synthesis channel is allocated to the target to-be-displayed layer. In other words, in this application, a synthesis channel is allocated to a to-be-displayed layer with a high priority in different domains based on an idle state of the synthesis channel in the DSS, that is, synthesis channels are uniformly allocated to to-be-displayed layers in different domains. Compared with a technical solution in the conventional technology in which DSS resources are allocated into a plurality of parts, each part of resources are bound to to-be-displayed layers in a specific domain, and DSS resources are isolated between different domains, in the method provided in this embodiment of this application, when an idle synthesis channel exists, the idle synthesis channel can be allocated to a to-be-displayed layer. Therefore, DSS resource utilization is improved.

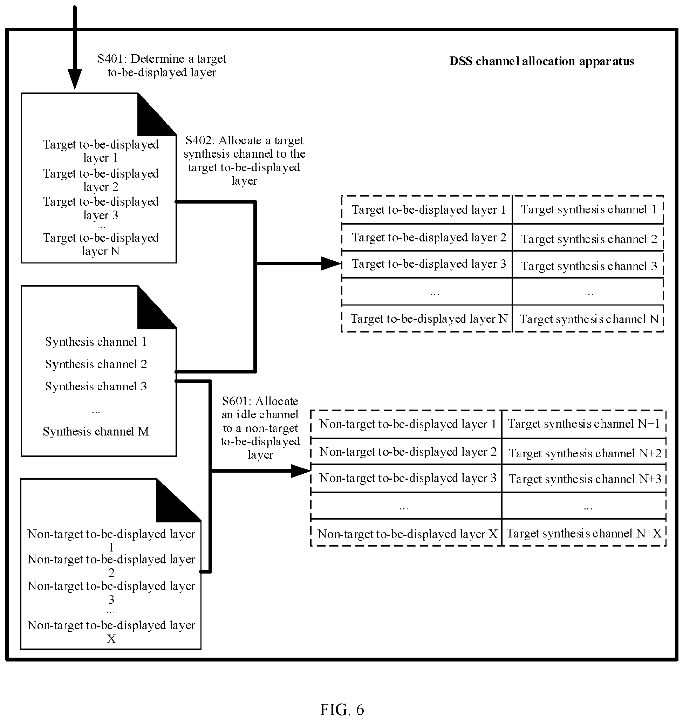

Optionally, after the channel allocation apparatus performs S402, if an idle channel in the at least one synthesis channel still exists, with reference to FIG. 4, as shown in FIG. 6, the DSS channel allocation method provided in this embodiment of this application further includes S601.

S601: The channel allocation apparatus allocates the idle channel to a non-target to-be-displayed layer in the first to-be-displayed layer and the second to-be-displayed layer.

The idle channel is a synthesis channel that is in the DSS and that is not used to transmit a layer at a current moment.

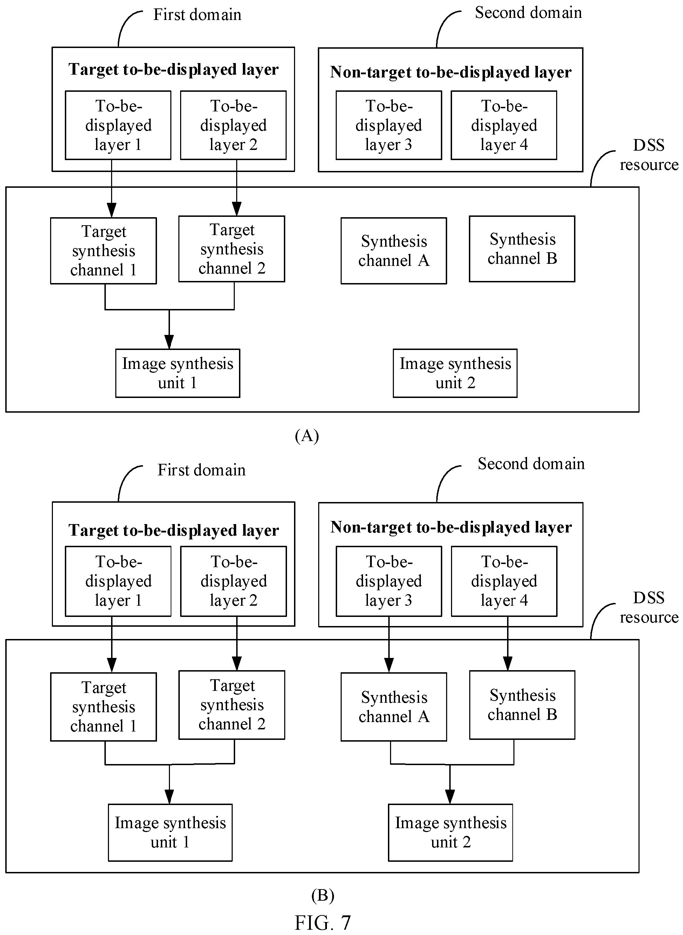

For example, as shown in (A) in FIG. 7, after the channel allocation apparatus determines the to-be-displayed layer in the first domain as the target to-be-displayed layer, and allocates the synthesis channel to the to-be-displayed layer, remaining idle channels in the DSS include a synthesis channel A and a synthesis channel B. In this case, as shown in (B) in FIG. 7, the channel allocation apparatus separately allocates the synthesis channel A and the synthesis channel B to a non-target to-be-displayed layer (for example, to-be-displayed layers 3 and 4 in the second domain), so that the synthesis channels A and B transmit the to-be-displayed layer 3 and the to-be-displayed layer 4 to the image synthesis unit 2 to synthesize an image.

According to the DSS channel allocation method provided in this embodiment of this application, after the synthesis channel is allocated to the target to-be-displayed layer with the high priority, if an idle channel exists in the at least one synthesis channel, the idle channel is allocated to the non-target to-be-displayed layer, so that the idle channel in the DSS is used to a greater extent, and the DSS resource utilization is improved.

Optionally, after the channel allocation apparatus performs S402, if no idle channel exists in the at least one synthesis channel, the channel allocation apparatus may allocate a synthesis channel to the non-target to-be-displayed layer when an idle channel exists in a synthesis channel pool of the DSS. Alternatively, a GPU may be used to perform layer synthesis on the non-target to-be-displayed layer. For example, there are five target to-be-displayed layers and five non-target to-be-displayed layers, and there are six synthesis channels in the DSS. In this case, the channel allocation apparatus preferentially allocates a synthesis channel to each of the five target to-be-displayed layers, so that the target to-be-displayed layers are transmitted to an image synthesis unit to synthesize an image for display. Then, the channel allocation apparatus invokes the GPU to synthesize the five non-target to-be-displayed layers, and sends a synthesized image to a display for display based on one remaining synthesis channel.

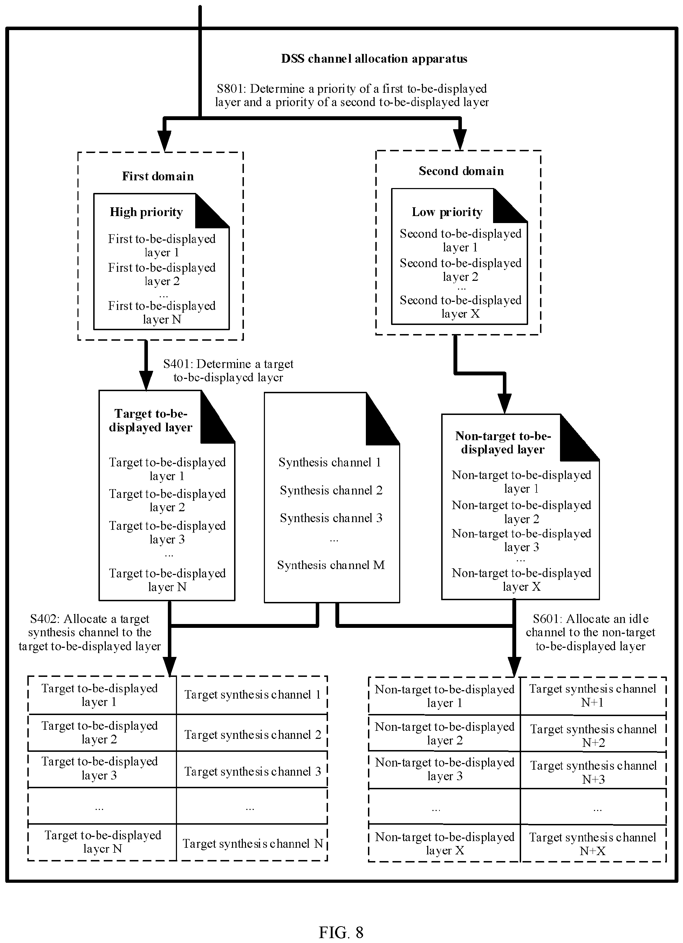

Optionally, before the channel allocation apparatus performs S401, with reference to FIG. 4 or FIG. 6, as shown in FIG. 8, the DSS channel allocation method provided in this embodiment of this application further includes S801.

S801: The channel allocation apparatus separately determines the priority of the first to-be-displayed layer and the priority of the second to-be-displayed layer based on a priority of the first domain and a priority of the second domain.

The priority of the first to-be-displayed layer is the priority of the first domain in which the first to-be-displayed layer is located, and the priority of the second to-be-displayed layer is the priority of the second domain in which the second to-be-displayed layer is located. In other words, a priority of a layer is a priority of a domain in which the layer is located.

In this embodiment of this application, the priority of the domain is determined as the priority of the to-be-displayed layer in the domain, so that priorities of different to-be-displayed layers in the domain are consistent. Further, when the image synthesis unit subsequently synthesizes the to-be-displayed image based on the to-be-displayed layer, the image synthesis unit does not need to wait for a layer with a lower priority, and the image synthesis unit simultaneously receives all to-be-displayed layers in the domain, so that synthesis efficiency of the to-be-displayed image is improved.

For example, it is assumed that a central control display of a vehicle has a domain, and the domain includes a to-be-displayed layer of tire pressure monitoring, a to-be-displayed layer of a current speed, and a to-be-displayed layer of a background. A priority of the to-be-displayed layer of the tire pressure monitoring and a priority the to-be-displayed layer of the current speed are higher than that of the to-be-displayed layer of the background. Therefore, when the central control display needs to display tire pressure information and the current speed of the vehicle on the basis of a background image, the channel allocation apparatus first allocates synthesis channels to the to-be-displayed layer of the tire pressure monitoring and the to-be-displayed layer of the current speed, and then allocates a synthesis channel to the to-be-displayed layer of the background. In this case, after the image synthesis unit receives the to-be-displayed layer of the tire pressure monitoring and the to-be-displayed layer of the current speed, the image synthesis unit needs to wait until the to-be-displayed layer of the background is also transmitted to the image synthesis unit, and then the image synthesis unit synthesizes, based on the to-be-displayed layer of the tire pressure monitoring, the to-be-displayed layer of the current speed, and the to-be-displayed layer of the background, an interface image that needs to be currently displayed. In this application, priorities of the to-be-displayed layer of the tire pressure monitoring, the to-be-displayed layer of the current speed, and the to-be-displayed layer of the background are all set as priorities of domains, so that the priorities of the to-be-displayed layer of the tire pressure monitoring, the to-be-displayed layer of the current speed, and the to-be-displayed layer of the background are consistent. Subsequently, the image synthesis unit simultaneously receives the to-be-displayed layer of the tire pressure monitoring, the to-be-displayed layer of the current speed, and the to-be-displayed layer of the background. The image synthesis unit does not need to wait for a to-be-displayed layer with a low priority, but directly synthesizes, based on the to-be-displayed layer of the tire pressure monitoring, the to-be-displayed layer of the current speed, and the to-be-displayed layer of the background, the interface image that needs to be currently displayed.

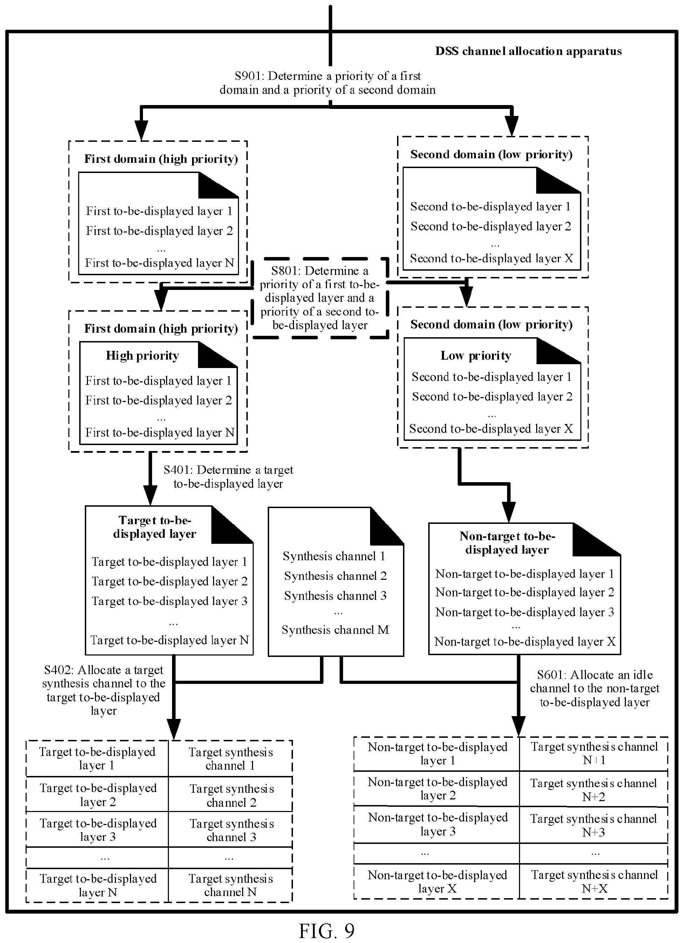

Optionally, in an implementation, with reference to FIG. 8, as shown in FIG. 9, a method for determining the priorities of the first domain and the second domain includes S901.

S901: The channel allocation apparatus determines the priority of the first domain and the priority of the second domain based on a refresh rate of a layer set in the first domain and a refresh rate of a layer set in the second domain.

It should be noted that the refresh rate of the layer set may be an average value of refresh rates of all layers in the layer set, or may be a maximum refresh rate or a minimum refresh rate in the layer set. The refresh rate of the layer set is not specifically limited in this embodiment of this application.

It should be noted that the refresh rate of the layer set is used to reflect importance of the layer set, and a higher refresh rate of a layer set indicates higher importance of the layer set. For example, in a one-core multi-screen scenario, a central control display of a vehicle is configured to display vehicle safety information of higher importance. Therefore, a layer set on the central control display needs to be refreshed in real time. In other words, a refresh rate is higher. A display behind a vehicle seat is used to watch movies, so importance of a layer set on the display is not high, and a refresh rate is lower.

The layer set in the first domain includes the first to-be-displayed layer, and the layer set in the second domain includes the second to-be-displayed layer. A higher refresh rate of a layer set indicates a higher priority of a domain to which the layer set belongs, that is, a higher priority of a to-be-displayed layer in the domain.

For example, it is assumed that the refresh rate of the layer set in the first domain is 16 ms/time, and the refresh rate of the layer set in the second domain is 33 ms/time. In this case, the channel allocation apparatus sets a value corresponding to the priority of the first domain to 5, and sets a value corresponding to the priority of the second domain to 2, so that the priority of the first domain is higher than the priority of the second domain.

In this embodiment of this application, a domain with a higher refresh rate of a layer set is determined as a domain with a higher priority, so that a synthesis channel is preferentially allocated to an important layer set, and reliability is improved.

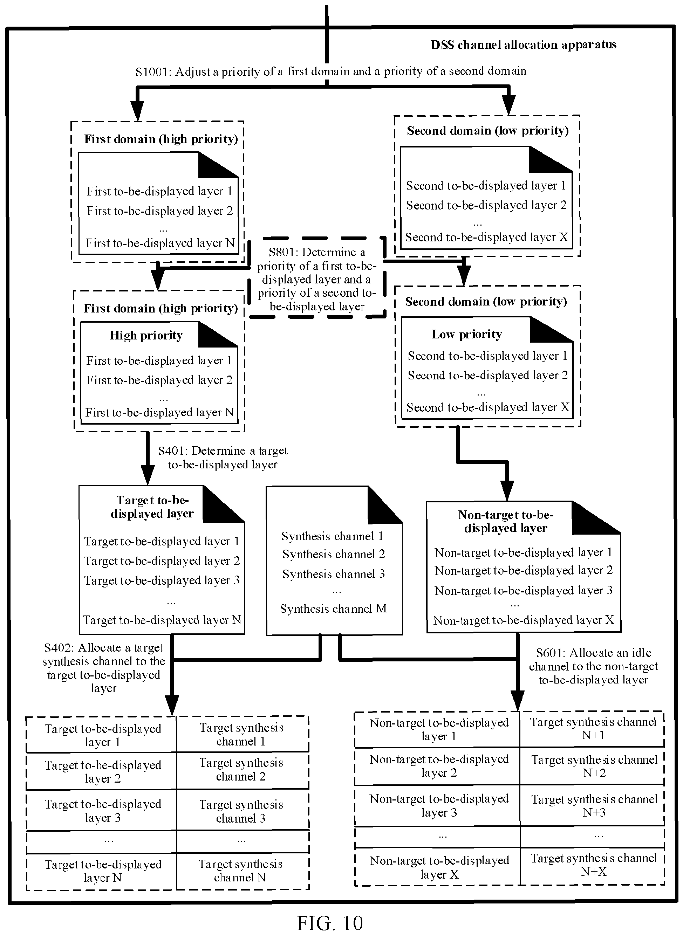

Optionally, in another implementation, when the DSS channel allocation method provided in this embodiment of this application is applied to a vehicle cockpit scenario, the priority of the first domain and the priority of the second domain in S801 may be adjusted. The vehicle cockpit includes a first display for displaying vehicle safety information and a second display for entertainment (that is, for displaying entertainment information such as music and a movie). The first display belongs to the first domain, and the second display belongs to the second domain. With reference to FIG. 8, as shown in FIG. 10, the DSS channel allocation method provided in this embodiment of this application further includes S1001.

S1001: The channel allocation apparatus adjusts the priority of the first domain and/or the priority of the second domain based on a running state of a vehicle in which the vehicle cockpit is located. The priority of the to-be-displayed layer is the priority of the domain to which the to-be-displayed layer belongs.

It should be understood that the first display for displaying the vehicle safety information may be at least one of a central control screen, an electronic reversing mirror, or a head-up display screen. The second display for entertainment may be a display for watching a video behind a seat or a display at a rear armrest.

It should be noted that the channel allocation apparatus may directly obtain the running state of the vehicle from an in-vehicle system, or when the running state of the vehicle changes, the in-vehicle system sends a changed running state of the vehicle to the channel allocation apparatus. A manner of obtaining the running state of the vehicle is not limited in this embodiment of this application.

The running state of the vehicle includes a parking state and a driving state.

A user has different main requirements in different running states of the vehicle. For example, in the parking state, the user has a higher requirement for entertainment. In the driving state, the user has a higher requirement for security. Therefore, dynamically adjusting the priority of the domain based on the running state of the vehicle helps improve user experience.

A specific implementation of S1001 includes S1 and/or S2.

S1: When the vehicle is in the parking state, the channel allocation apparatus adjusts the priority of the first domain and/or the priority of the second domain, so that the priority of the first domain is lower than the priority of the second domain.

The parking state indicates that the vehicle is in a state in which the vehicle shuts down an engine but is not powered off. In other words, the engine of the vehicle is stopped, but a power supply system of the vehicle still supplies power.

A specific implementation of S1 is as follows: When the vehicle is in the parking state, the priority of the first domain is decreased, and/or the priority of the second domain is increased, so that the priority of the first domain is lower than the priority of the second domain.

When a priority of a domain is higher, a synthesis channel is preferentially allocated to a to-be-displayed layer corresponding to the domain, so that an image is synthesized more quickly. In addition, when the vehicle is in the parking state, security is high. In this case, a main requirement of the user is usually an entertainment function. Therefore, a priority of the domain to which the second display (for entertainment) belongs is set to be higher than a priority of the domain to which the first display (for displaying the vehicle security information) belongs. This helps synthesize an image representing entertainment information more quickly, so that user experience is improved.

S2: When the vehicle is in the driving state, the channel allocation apparatus adjusts the priority of the first domain and/or the priority of the second domain, so that the priority of the first domain is higher than the priority of the second domain.

The driving state indicates that the vehicle does not shut down the engine.

A specific implementation of S2 is as follows: When the vehicle is in the driving state, the priority of the first domain is increased, and/or the priority of the second domain is decreased, so that the priority of the first domain is higher than the priority of the second domain.

When a priority of a domain is higher, a synthesis channel is preferentially allocated to a to-be-displayed layer corresponding to the domain, so that an image is synthesized more quickly. In addition, when the vehicle is in the driving state, security is more critical than entertainment. Therefore, a priority of the domain to which the first display (for displaying the vehicle security information) belongs is set to be higher than a priority of the domain to which the second display (for entertainment) belongs. This helps more quickly synthesize an image representing the vehicle safety information, so that user experience is improved.

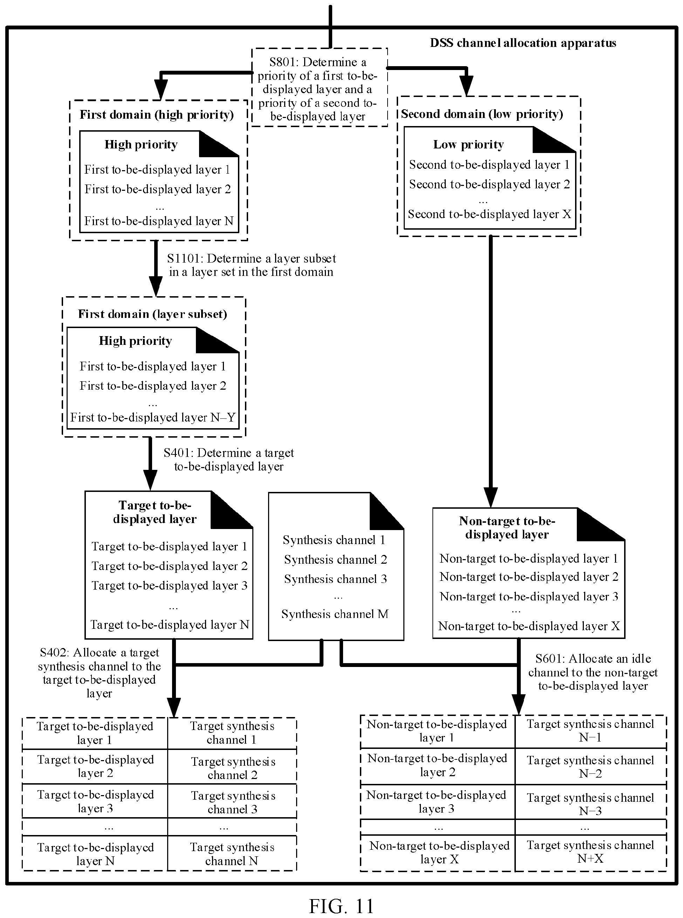

Optionally, in another implementation, with reference to FIG. 8, as shown in FIG. 11, after the channel allocation apparatus performs S801, the DSS channel allocation method provided in this embodiment of this application further includes S1101.

S1101: The channel allocation apparatus determines a layer subset in the layer set in the first domain.

The layer subset is a set including some layers in the layer set in the first domain, the layer subset includes the first to-be-displayed layer, and a refresh rate of a layer in the layer subset is higher than a refresh rate of the second to-be-displayed layer.

A specific implementation of S1101 is as follows: The channel allocation apparatus moves a layer whose refresh rate is lower than the refresh rate of the second to-be-displayed layer and that is in the layer set of the first domain (first layer set for short) from the first layer set to an independent layer set. In this case, the updated first layer set is the layer subset.

In this embodiment of this application, a synthesis channel is preferentially allocated to a layer with a higher refresh rate in the layer set of the first domain, so that a problem that a layer with a lower refresh rate in the first domain also preferentially occupies a synthesis channel is resolved, and synthesis channel utilization is improved.

For example, the central control display of the vehicle is configured to display safety information of the vehicle, where the security information specifically includes: tire pressure information, current vehicle speed information, and information about fuel consumption per 100 kilometers. A to-be-displayed layer of the tire pressure information and a to-be-displayed layer of the current vehicle information have a high priority, and the two to-be-displayed layers have higher importance and need to be refreshed in real time. A to-be-displayed layer of the information about fuel consumption per 100 kilometers has a lower priority and does not need to be refreshed in real time. If the to-be-displayed layer of the information about fuel consumption per 100 kilometers is also refreshed in real time, some synthesis channels in the DSS are occupied. Therefore, in this application, the to-be-displayed layer of the tire pressure information and the to-be-displayed layer of the current vehicle information is determined as a layer subset, a synthesis channel is preferentially allocated to a to-be-displayed layer in the layer subset, so that an image with higher importance can be refreshed in real time.

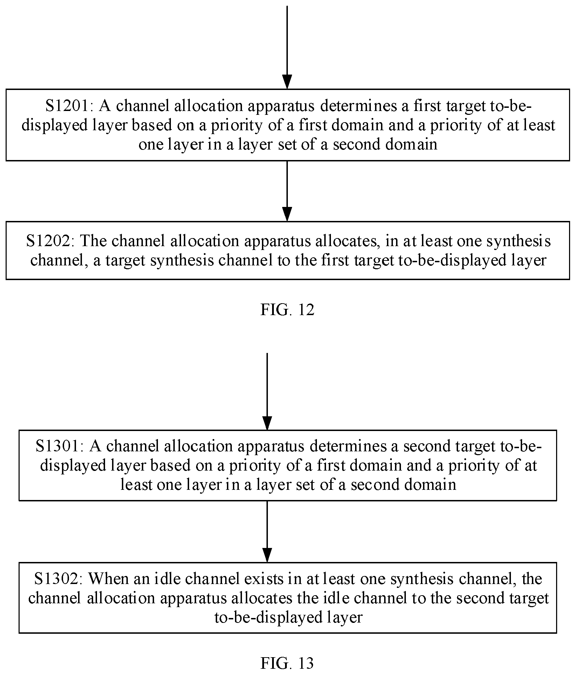

It should be noted that, when the priority of the first domain is higher than the priority of the second domain, a layer whose importance is higher than that of the first domain may exist in the layer set of the second domain. In other words, a layer whose priority is higher than the priority of the first domain exists in the layer set of the second domain. Therefore, a synthesis channel needs to be preferentially allocated to the layer whose priority is higher than the priority of the first domain and that is in the second domain. Based on this, an embodiment of this application provides another channel allocation method for a display subsystem, as shown in FIG. 12. The method includes the following steps.

S1201: A channel allocation apparatus determines a first target to-be-displayed layer based on a priority of a first domain and a priority of at least one layer in a layer set of a second domain.

It should be noted that the method for determining the priority of the first domain is similar to that of the priority of the first domain in S901. For specific descriptions of the method for determining the priority of the first domain in S1201, refer to the related descriptions of S901. Details are not described herein again.

A method for determining the priority of the at least one layer in the layer set of the second domain may be determined based on the method in S901, or may be specified by a user. Specifically, the method for determining the priority of the at least one layer is not limited in this embodiment of this application.

The first target to-be-displayed layer is a layer whose priority is higher than the priority of the first domain and that is in the layer set of the second domain, where the priority of the first domain is higher than a priority of the second domain.

For example, a vehicle cockpit includes a display (namely, the first domain) for entertainment (that is, for displaying entertainment information such as music, a movie, and a phone) and a central control screen (namely, the second domain) for displaying vehicle safety information. The layer set of the second domain includes: a layer displaying a rotational speed of an engine, a layer displaying a parking state of a vehicle, and a layer displaying tire pressure monitoring. When the vehicle is in the parking state, the priority of the first domain is 6, and the priority of the second domain is 5, so the priority of the first domain is higher than the priority of the second domain. In the second domain, a priority of the layer displaying the rotational speed of the engine is 1, a priority of the layer displaying the parking state of the vehicle is 6, and a priority of the layer displaying the tire pressure monitoring is 8. In this case, because the priority 8 of the layer for displaying the tire pressure monitoring is greater than the priority 6 of the first domain, the layer for displaying the tire pressure monitoring is determined as the first target to-be-displayed layer.

S1202: The channel allocation apparatus allocates, in at least one synthesis channel, a target synthesis channel to the first target to-be-displayed layer.

The target synthesis channel is configured to transmit the first target to-be-displayed layer to an image synthesis unit, so that the image synthesis unit synthesizes the first target to-be-displayed layer into a to-be-displayed image.

It should be noted that an implementation of S1202 is consistent with an implementation of S402. For specific descriptions of S1202, refer to the related descriptions of S402. Details are not described herein again.

In this embodiment of this application, when the priority of the first domain is higher than the priority of the second domain, the layer whose priority is higher than the priority of the first domain and that is in the layer set of the second domain is determined as the first target to-be-displayed layer. In addition, the target synthesis channel is preferentially allocated to the first target to-be-displayed layer, so that a problem that a layer with a lower refresh rate in the first domain also preferentially occupies a synthesis channel is resolved, and synthesis channel utilization is improved.

Optionally, when the layer set of the second domain in S1201 does not include the first target to-be-displayed layer, or when a layer whose priority is equal to the priority of the first domain exists in the layer set of the second domain, as shown in FIG. 13, the channel allocation method for the display subsystem further includes S1301 and S1302.

S1301: The channel allocation apparatus determines a second target to-be-displayed layer based on the priority of the first domain and a priority of at least one layer in the layer set of the second domain.

The second target to-be-displayed layer includes a first to-be-displayed layer and a layer in a layer set of the first domain. The first to-be-displayed layer is a layer whose priority is equal to the priority of the first domain and that is in the layer set of the second domain.

A specific implementation method of S1301 includes: The channel allocation apparatus determines, from the layer set of the second domain, the first to-be-displayed layer whose priority is the same as the priority of the first domain; and the channel allocation apparatus determines the first to-be-displayed layer and the layer in the layer set of the first domain as the second target to-be-displayed layer.

For example, based on the example in S1201, the channel allocation apparatus determines, as the first to-be-displayed layer, the layer that displays the vehicle parking state and whose priority is the same as that of the first domain. Then, the channel allocation apparatus determines the first to-be-displayed layer and all layers in the layer set of the first domain as the second target to-be-displayed layer.

S1302: When an idle channel exists in the at least one synthesis channel, the channel allocation apparatus allocates the idle channel to the second target to-be-displayed layer.

It should be noted that an implementation of S1302 is consistent with an implementation of S601. For specific descriptions of S1302, refer to the related descriptions of S601. Details are not described herein again.

In this embodiment of this application, after the synthesis channel is allocated to the first target to-be-displayed layer that has a high priority, if an idle channel exists in the at least one synthesis channel, the idle channel is allocated to the second target to-be-displayed layer that includes the first to-be-displayed layer and the layer in the layer set of the first domain. The first to-be-displayed layer is a layer whose priority is equal to the priority of the first domain and that is in the layer set of the second domain. In this way, the idle channel in a DSS is utilized to a greater extent, and DSS resource utilization is improved.

Correspondingly, an embodiment of this application provides a DSS channel allocation apparatus. The DSS channel allocation apparatus is configured to perform steps in the DSS channel allocation method. In this embodiment of this application, the DSS channel allocation apparatus may be divided into function modules based on the method examples. For example, each function module may be obtained through division based on a corresponding function, or two or more functions may be integrated into one processing module. The integrated module may be implemented in a form of hardware, or may be implemented in a form of a software function module. In this embodiment of this application, module division is an example, and is merely a logical function division. In actual implementation, another division manner may be used.

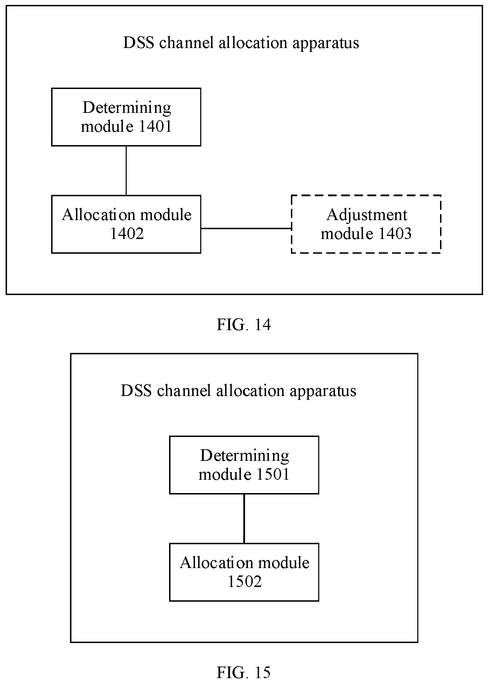

When each function module is obtained through division based on each corresponding function, FIG. 14 is a possible diagram of a structure of the DSS channel allocation apparatus in the foregoing embodiments. As shown in FIG. 14, the DSS channel allocation apparatus includes a determining module 1401 and an allocation module 1402.

The determining module 1401 is configured to determine a target to-be-displayed layer based on a priority of a first to-be-displayed layer and a priority of a second to-be-displayed layer, for example, perform step S401 in the foregoing method embodiment.

The allocation module 1402 is configured to allocate, in at least one synthesis channel, a target synthesis channel to the target to-be-displayed layer, for example, perform step S402 in the foregoing method embodiment.

Optionally, the DSS channel allocation method provided in this embodiment of this application further includes an adjustment module 1403.

The adjustment module 1403 is configured to adjust a priority of a first domain and/or a priority of a second domain based on a running state of a vehicle in which a vehicle cockpit is located, for example, perform step S1001 in the foregoing method embodiment.

The modules of the DSS channel allocation method may be further configured to perform other actions in the foregoing method embodiments. All related content of the steps in the foregoing method embodiments may be cited to function descriptions of corresponding function modules. Details are not described herein again.

Some or all of the steps of the determining module 1401, the allocation module 1402, and the adjustment module 1403 may be implemented by the processor 301 in FIG. 3 by executing the code in the memory 302.

Correspondingly, an embodiment of this application provides another DSS channel allocation apparatus. The DSS channel allocation apparatus is configured to perform steps in the DSS channel allocation method. In this embodiment of this application, the DSS channel allocation apparatus may be divided into function modules based on the method examples shown in FIG. 12 and FIG. 13. For example, each function module may be obtained through division based on a corresponding function, or two or more functions may be integrated into one processing module. The integrated module may be implemented in a form of hardware, or may be implemented in a form of a software function module. In this embodiment of this application, module division is an example, and is merely a logical function division. In actual implementation, another division manner may be used.

When each function module is obtained through division based on each corresponding function, FIG. 15 is a possible diagram of a structure of the DSS channel allocation apparatus in the foregoing embodiments. As shown in FIG. 15, the DSS channel allocation apparatus includes a determining module 1501 and an allocation module 1502.

The determining module 1501 is configured to determine a first target to-be-displayed layer based on a priority of a first domain and a priority of at least one layer in a layer set of a second domain, for example, perform step S1201 in the foregoing method embodiment.

The allocation module 1502 is configured to allocate, in at least one synthesis channel, a target synthesis channel to the first target to-be-displayed layer, for example, perform step S1202 in the foregoing method embodiment.

Optionally, the determining module 1501 is further configured to determine a second target to-be-displayed layer based on the priority of the first domain and a priority of at least one layer in the layer set of the second domain, for example, perform step S1301 in the foregoing method embodiment.

The allocation module 1502 is further configured to: when an idle channel exists in the at least one synthesis channel, allocate the idle channel to the second target to-be-displayed layer, for example, perform step S1302 in the foregoing method embodiment.

Some or all of the steps of the determining module 1501 and the allocation module 1502 may be implemented by the processor 301 in FIG. 3 by executing the code in the memory 302.

All or some of the foregoing embodiments may be implemented by using software, hardware, firmware, or any combination thereof. When a software program is used to implement the embodiments, the embodiments may be implemented entirely or partially in a form of a computer program product. The computer program product includes one or more computer instructions. When the computer instructions are loaded and executed on a computer, all or some of the procedures or functions according to embodiments of this application are generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device, for example, a server or a data center, integrating one or more usable media. The usable medium may be a magnetic medium (for example, a floppy disk, a magnetic disk, or a magnetic tape), an optical medium (for example, a digital video disc (digital video disc, DVD)), a semiconductor medium (for example, a solid state drive (solid state drive, SSD)), or the like.

Based on the foregoing descriptions of the implementations, a person skilled in the art may clearly understand that for the purpose of convenient and brief descriptions, division into the foregoing function modules is merely used as an example for description. During actual application, the foregoing functions can be allocated to different function modules for implementation based on a requirement, that is, an inner structure of an apparatus is divided into different function modules to implement all or some of the functions described above. For a specific working process of the foregoing system, apparatus, and unit, refer to a corresponding process in the foregoing method embodiments, and details are not described herein again.

In the several embodiments provided in this application, it should be understood that the disclosed system, apparatus, and method may be implemented in other manners. For example, the described apparatus embodiments are merely examples. For example, division into the modules or units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or other forms.

The units described as separate components may or may not be physically separate, and parts displayed as units may or may not be physical units, may be located in one place, or may be distributed on a plurality of network units. Some or all of the units may be selected based on actual requirements to achieve the objectives of the solutions of embodiments.

In addition, function units in embodiments of this application may be integrated into one processing unit, or each of the units may exist alone physically, or two or more units may be integrated into one unit. The integrated unit may be implemented in a form of hardware, or may be implemented in a form of a software function unit.

When the integrated unit is implemented in a form of a software function unit and sold or used as an independent product, the integrated unit may be stored in a computer-readable storage medium. Based on such an understanding, the technical solutions of this application essentially, or the part contributing to the conventional technology, or all or some of the technical solutions may be implemented in a form of a software product. The computer software product is stored in a storage medium, and includes several instructions for instructing a computer device (which may be a personal computer, a server, a network device, or the like) or a processor to perform all or some of the steps of the methods described in embodiments of this application. The foregoing storage medium includes any medium that can store program code, such as a flash memory, a removable hard disk, a read-only memory, a random access memory, a magnetic disk, or an optical disc.

The foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. A channel allocation method for a display subsystem, comprising:
determining a target to-be-displayed layer based on a priority of a first to-be-displayed layer and a priority of a second to-be-displayed layer, wherein the first to-be-displayed layer belongs to a first domain, the second to-be-displayed layer belongs to a second domain, the first domain is different from the second domain, and the target to-be-displayed layer is a layer with a higher priority in the first to-be-displayed layer and the second to-be-displayed layer; and
allocating, in at least one synthesis channel, a target synthesis channel to the target to-be-displayed layer, wherein the target synthesis channel is configured to transmit the target to-be-displayed layer to an image synthesis unit, so that the image synthesis unit synthesizes the target to-be-displayed layer into a to-be-displayed image.

2. The method according to claim 1, wherein after the allocating, in at least one synthesis channel, a target synthesis channel to the target to-be-displayed layer, the method further comprises:
when an idle channel exists in a non-target synthesis channel of the at least one synthesis channel, allocating the idle channel to a non-target to-be-displayed layer in the first to-be-displayed layer and the second to-be-displayed layer.

3. The method according to claim 1 or 2, wherein the method further comprises:
separately determining the priority of the first to-be-displayed layer and the priority of the second to-be-displayed layer based on a priority of the first domain and a priority of the second domain, wherein a priority of a to-be-displayed layer is a priority of a domain to which the to-be-displayed layer belongs.

4. The method according to claim 3, wherein the method further comprises:
determining the priority of the first domain and the priority of the second domain based on a refresh rate of a layer set in the first domain and a refresh rate of a layer set in the second domain, wherein the layer set in the first domain comprises the first to-be-displayed layer, the layer set in the second domain comprises the second to-be-displayed layer, and a higher refresh rate of a layer set indicates a higher priority of a domain to which the layer set belongs.

5. The method according to claim 3, wherein the method further comprises:
determining a layer subset in a layer set in the first domain, wherein a refresh rate of a layer in the layer subset is higher than a refresh rate of the second to-be-displayed layer, and the layer subset comprises the first to-be-displayed layer.

6. The method according to claim 3, wherein the method further comprises:
adjusting the priority of the first domain and/or the priority of the second domain.

7. The method according to any one of claims 1 to 6, wherein the method is used in a vehicle cockpit, the vehicle cockpit comprises a first display for displaying vehicle safety information and a second display for entertainment, the first display belongs to the first domain, and the second display belongs to the second domain.

8. The method according to claim 7, wherein the method further comprises:
adjusting the priority of the first domain and/or the priority of the second domain based on a running state of a vehicle in which the vehicle cockpit is located, wherein the priority of the to-be-displayed layer is the priority of the domain to which the to-be-displayed layer belongs.

9. The method according to claim 8, wherein the adjusting the priority of the first domain and/or the priority of the second domain based on a running state of a vehicle in which the vehicle cockpit is located comprises:
when the vehicle is in a parking state, adjusting the priority of the first domain and/or the priority of the second domain, so that the priority of the first domain is lower than the priority of the second domain; or
when the vehicle is in a driving state, adjusting the priority of the first domain and/or the priority of the second domain, so that the priority of the first domain is higher than the priority of the second domain.

10. A channel allocation method for a display subsystem, comprising:
determining a first target to-be-displayed layer based on a priority of a first domain and a priority of at least one layer in a layer set of a second domain, wherein the first target to-be-displayed layer is a layer whose priority is higher than the priority of the first domain and that is in the layer set of the second domain, and the priority of the first domain is higher than a priority of the second domain; and
allocating, in at least one synthesis channel, a target synthesis channel to the first target to-be-displayed layer, wherein the target synthesis channel is configured to transmit the first target to-be-displayed layer to an image synthesis unit, so that the image synthesis unit synthesizes the first target to-be-displayed layer into a to-be-displayed image.

11. The method according to claim 10, wherein the method further comprises:
determining a second target to-be-displayed layer based on the priority of the first domain and a priority of at least one layer in the layer set of the second domain, wherein the second target to-be-displayed layer comprises a first to-be-displayed layer and a layer in a layer set of the first domain, and the first to-be-displayed layer is a layer whose priority is equal to the priority of the first domain and that is in the layer set of the second domain; and
when an idle channel exists in the at least one synthesis channel, allocating the idle channel to the second target to-be-displayed layer.

12. A channel allocation apparatus for a display subsystem, wherein the channel allocation apparatus comprises a determining module and an allocation module, wherein
the determining module is configured to determine a target to-be-displayed layer based on a priority of a first to-be-displayed layer and a priority of a second to-be-displayed layer, wherein the first to-be-displayed layer belongs to a first domain, the second to-be-displayed layer belongs to a second domain, the first domain is different from the second domain, and the target to-be-displayed layer is a layer with a higher priority in the first to-be-displayed layer and the second to-be-displayed layer; and
the allocation module is configured to allocate, in at least one synthesis channel, a target synthesis channel to the target to-be-displayed layer, wherein the target synthesis channel is configured to transmit the target to-be-displayed layer to an image synthesis unit, so that the image synthesis unit synthesizes the target to-be-displayed layer into a to-be-displayed image.

13. The channel allocation apparatus according to claim 12, wherein
the allocation apparatus is further configured to: when an idle channel exists in a non-target synthesis channel of the at least one synthesis channel, allocate the idle channel to a non-target to-be-displayed layer in the first to-be-displayed layer and the second to-be-displayed layer.

14. The channel allocation apparatus according to claim 12 or 13, wherein
the determining module is configured to separately determine the priority of the first to-be-displayed layer and the priority of the second to-be-displayed layer based on a priority of the first domain and a priority of the second domain, wherein a priority of a to-be-displayed layer is a priority of a domain to which the to-be-displayed layer belongs.

15. The channel allocation apparatus according to claim 14, wherein
the determining module is configured to determine the priority of the first domain and the priority of the second domain based on a refresh rate of a layer set in the first domain and a refresh rate of a layer set in the second domain, wherein the layer set in the first domain comprises the first to-be-displayed layer, the layer set in the second domain comprises the second to-be-displayed layer, and a higher refresh rate of a layer set indicates a higher priority of a domain to which the layer set belongs.

16. The channel allocation apparatus according to claim 14, wherein
the determining module is configured to determine a layer subset in a layer set in the first domain, wherein a refresh rate of a layer in the layer subset is higher than a refresh rate of the second to-be-displayed layer, and the layer subset comprises the first to-be-displayed layer.

17. The channel allocation apparatus according to claim 14, wherein the apparatus further comprises an adjustment module, wherein
the adjustment module is configured to adjust the priority of the first domain and/or the priority of the second domain.

18. The channel allocation apparatus according to any one of claims 12 to 17, wherein the apparatus is used in a vehicle cockpit, the vehicle cockpit comprises a first display for displaying vehicle safety information and a second display for entertainment, the first display belongs to the first domain, and the second display belongs to the second domain.

19. The channel allocation apparatus according to claim 18, wherein
the adjustment module is configured to adjust the priority of the first domain and/or the priority of the second domain based on a running state of a vehicle in which the vehicle cockpit is located, wherein the priority of the to-be-displayed layer is the priority of the domain to which the to-be-displayed layer belongs.

20. The channel allocation apparatus according to claim 19, wherein
the adjustment module is configured to: when the vehicle is in a parking state, adjust the priority of the first domain and/or the priority of the second domain, so that the priority of the first domain is lower than the priority of the second domain; or
when the vehicle is in a driving state, the adjustment module adjusts the priority of the first domain and/or the priority of the second domain, so that the priority of the first domain is higher than the priority of the second domain.

21. A channel allocation apparatus for a display subsystem, wherein the channel allocation apparatus comprises a determining module and an allocation module, wherein
the determining module is configured to determine a first target to-be-displayed layer based on a priority of a first domain and a priority of at least one layer in a layer set of a second domain, wherein the first target to-be-displayed layer is a layer whose priority is higher than the priority of the first domain and that is in the layer set of the second domain, and the priority of the first domain is higher than a priority of the second domain; and
the allocation module is configured to allocate, in at least one synthesis channel, a target synthesis channel to the first target to-be-displayed layer, wherein the target synthesis channel is configured to transmit the first target to-be-displayed layer to an image synthesis unit, so that the image synthesis unit synthesizes the first target to-be-displayed layer into a to-be-displayed image.

22. The channel allocation apparatus according to claim 21, wherein the apparatus further comprises:
the determining module is further configured to determine a second target to-be-displayed layer based on the priority of the first domain and a priority of at least one layer in the layer set of the second domain, wherein the second target to-be-displayed layer comprises a first to-be-displayed layer and a layer in a layer set of the first domain, and the first to-be-displayed layer is a layer whose priority is equal to the priority of the first domain and that is in the layer set of the second domain; and
the allocation module is further configured to: when an idle channel exists in the at least one synthesis channel, allocate the idle channel to the second target to-be-displayed layer.

23. An electronic device, comprising a memory and a processor, wherein the memory is coupled to the processor; the memory is configured to store computer program code, and the computer program code comprises computer instructions; and when the computer instructions are executed by the processor, the electronic device is enabled to perform the method according to any one of claims 1 to 9, claim 10, or claim 11.

24. A computer-readable storage medium, wherein the computer-readable storage medium stores computer instructions, and when the computer instructions are run on a computing device, the computing device is enabled to perform the method according to any one of claims 1 to 9, claim 10, or claim 11.
